# EUROPÄISCHE PATENTSCHRIFT

(11) **EP 1 514 751 B1**
(45) Veröffentlichungstag und Bekanntmachung des Hinweises auf die Patenterteilung: **17.10.2007**
(21) Anmeldenummer: 04019127.2
(22) Anmeldetag: 12.08.2004
(51) Int. Cl.: B60S 1/32, G01B 5/24

(54) **Set von Adaptern zur Kopplung eines Scheibenwischerarmes an eine Aufnahmeeinrichtung eines Mess- oder Einstellgeräts**
Set of adapters for coupling a wiper arm to the holding arrangement of a measuring- or an adjusting-device
Ensemble des adaptateurs pour le couplage d'un bras d'essuie-glace à un dispositif de retenue d'un appareil de messure ou de réglage

(30) Priorität: 09.09.2003 DE 20314115 U
(43) Veröffentlichungstag der Anmeldung: 16.03.2005
(73) Patentinhaber: Autotestgeräte Leitenberger GmbH, 72138 Kirchentellinsfurt (DE)
(72) Erfinder: Leitenberger, Achim, 70619 Stuttgart (DE)
(74) Vertreter: Patentanwälte Ruff, Wilhelm, Beier, Dauster & Partner

(56) Entgegenhaltungen:
- EP-A- 0 838 379
- DE-A1- 1 907 389
- DE-A1- 19 535 048
- US-A- 1 681 724

## Beschreibung

### Anwendungsgebiet und Stand der Technik

Die Erfindung betrifft ein Set von Adaptern zur Kopplung eines Scheibenwischerarms an eine Aufnahmeeinrichtung eines Messgeräts oder eines Einstellgeräts.

Aus der DE 195 35 048 A1 ist bekannt, von welcher Bedeutung beispielsweise der Auflagewinkel des Scheibenwischerblattes auf der Scheibe ist. Verändert werden kann dieser beispielsweise durch Verdrehen des Scheibenwischerarmes. Dieser kann in ein Einstellgerät eingespannt werden, wodurch sein Winkel ablesbar ist. Durch Ansetzen eines Schraubenschlüssels oder eines anderen Werkzeugs an das Einstellgerät kann ein gewünschter Winkel eingestellt werden.

Die US 1681724 zeigt ein Einstellgerät für einen Scheibenwischerarm. Dadurch wird die Durchbiegung des Scheibenwischerarms in seinem mittleren Bereich bestimmt und/oder eingestellt. Die Einstellvorrichtung wird mit einem Aufnahmeschlitz über den Scheibenwischerarm geschoben und dann mit einer Einstellschraube in gewisser Entfernung davon die richtige Durchbiegung eingestellt. Dabei wird lediglich mit einem Kopf der Einstellschraube gegen den Scheibenwischerarm gedrückt.

Die DE 1 907 389 A1 beschreibt, wie ein Scheibenwischerarm an einer Einstellvorrichtung zur Prüfung der richtigen Einbaulage befestigt werden kann. Dazu ist eine Klemmschraube vorgesehen, die den direkt in eine Ausnehmung an der Einstellvorrichtung eingesetzten Scheibenwischerarm festklemmt.

Nachteilig bei dem vorbeschriebenen Einstellgerät ist, dass die Einspannung des Scheibenwischerarms an dem Einstellgerät für verschiedene Typen von Scheibenwischerarmen nicht immer mit der gewünschten Präzision möglich ist. Des weiteren greift die zur Verdrehung aufzubringende Kraft nicht direkt, sondern nur über die Einspannung an dem Einstellgerät indirekt an dem Scheibenwischerarm an.

Es werden auch immer mehr Scheibenwischer entwickelt, die eine andere Konstruktion des Scheibenwischerarms aufweisen, insbesondere ohne Gestänge. Diese sind beispielsweise von der Fa. Robert Bosch unter der Bezeichnung "Aero-Wischer" auf dem Markt.

### Aufgabe und Lösung

Der Erfindung liegt die Aufgabe zugrunde, ein eingangs genanntes Set von Adaptern zu schaffen, mit denen die Nachteile des Standes der Technik vermieden werden können und insbesondere die Kopplung eines Scheibenwischerarms an ein Messgerät oder Einstellgerät verbessert und eine genaue Messung oder Einstellung an dem Scheibenwischerarm vorgenommnen werden können.

Gelöst wird diese Aufgabe durch ein Set von mehreren Adaptern mit den Merkmalen des Anspruchs 1. Vorteilhafte sowie bevorzugte Ausgestaltungen der Erfindung sind Gegenstand der weiteren Ansprüche und werden im folgenden näher erläutert. Dabei wird auf Merkmale eingegangen, die bei einem Set von Adaptern verwendet werden können. Der Wortlaut der Ansprüche wird durch ausdrückliche Bezugnahme zum Inhalt der Beschreibung gemacht.

Ein Adapter ist dazu ausgebildet, einen Scheibenwischerarm an eine Aufnahmeeinrichtung oder Aufnahme eines Geräts anzukoppeln, wobei das Gerät zum Vermessen und/oder zum Einstellen des Scheibenwischerarms geeignet sein kann. Beispielsweise können Anstellwinkel eines Scheibenwischers, welcher am Ende des Scheibenwischerarms befestigt ist, oder Anpressdruck des Scheibenwischers gegen die Scheibe erfasst und gegebenenfalls eingestellt oder korrigiert werden. Vorteilhaft wird der Scheibenwischer vor der Ankopplung von dem Scheibenwischerarm abgenommen.

Der Adapter weist einen ersten sogenannten Arm-Bereich auf, mit welchem der Adapter an dem Scheibenwischerarm befestigt wird. Des weiteren weist der Adapter einen zweiten sogenannten Aufnahme-Bereich auf, mit dem er an die Aufnahmeeinrichtung angekoppelt bzw. damit verbunden wird.

Mit einem erfindungsgemäßen set von Adaptern ist es vorteilhaft möglich, die Aufnahmeeinrichtung sozusagen normiert bzw. nur in einer einzigen Version herzustellen und gleichzeitig beliebig unterschiedlich ausgebildete Scheibenwischerarme fest und sicher daran anzukoppeln. Der erste Arm-Bereich sowie der zweite Aufnahme-Bereich können speziell für den beabsichtigten Zweck ausgebildet sein, so dass die jeweiligen Befestigungen angepasst und mechanisch sehr stabil ausgebildet sein können. Es werden jeweils nur unterschiedliche Adapter benötigt, welche aus einem erfindungsgemäßen Set von Adaptern ausgewählt werden können, um einen beliebigen Scheibenwischerarm passgenau mit der Aufnahmeeinrichtung bzw. dem Mess- oder Einstellgerät zu verbinden. Erfindungsgemäß weisen alle möglichen Adapter im Rahmen der Erfindung, welche zu dem vorgenannten Set gehören können, einen zweiten Aufnahme-Bereich auf, der immer gleich ist.

Besonders vorteilhaft erfolgt eine Befestigung des Adapters mit dem ersten Arm-Bereich an einem Ende des Scheibenwischerarms bzw. an der Stelle, an der auch der Scheibenwischer daran befestigt ist. So kann versucht werden, möglichst die gleiche Befestigung des Adapters mit dem ersten Arm-Bereich an dem Scheibenwischerarm zu erreichen wie der Scheibenwischer selber. Hierzu sollte die Befestigung jeweils gleich ausgebildet sein. Dabei kann der erste Arm-Bereich Ausnehmungen und/oder Vorsprünge aufweisen, welche zu der Ausbildung des Scheibenwischerarms für die Befestigung des Scheibenwischers korrespondieren. Wird ein Scheibenwischerarm mit einer Bohrung auf einen Zapfen am Scheibenwischerarm aufgesteckt, so sollte der erste Arm-Bereich dieselbe oder zumindest eine entsprechende Bohrung aufweisen.

Die Befestigung des Arm-Bereichs an dem Scheibenwischerarm ist bei einer einfachen Ausführung vorteilhaft steckbar ausgebildet. So ist es möglich, ohne zusätzliche bewegliche Teile, beispielsweise Verriegelungs- oder Klemmteile, auszukommen. Eine derartige Befestigung geht sehr schnell. Schließlich ist sie nicht denselben Belastungen ausgesetzt wir ein Scheibenwischer in Betrieb, also beispielsweise dem Fahrtwind bei hohen Geschwindigkeiten.

Bei einer alternativen Ausführungsform der Erfindung ist der Arm-Bereich mit einer breiten Öffnung für eine Klemmung, vorteilhaft seitlich mittels einer Klemmschraube, ausgebildet. So können auch solche Scheibenwischerarme eingespannt werden, welche ansonsten nicht in gängige Maße passen, beispielsweise weil sie zu groß sind.

Ein möglichst normiert ausgebildeter zweiter Aufnahme-Bereich des Adapters kann mit einer relativ einfachen geometrischen Grundform ausgebildet sein. Insbesondere kann er zylindrisch sein bzw. einen zylindrischen Abschnitt aufweisen, der vorteilhaft viereckig sein kann. So wird eine gewisse Verwindungssteifigkeit bzw. Verdrehfestigkeit gegeben.

Des Weiteren ist der zweite Aufnahme-Bereich vorteilhaft mit der Aufnahmeeinrichtung zusammen derart ausgebildet, dass eine Steckverbindung hergestellt werden kann. Besonders vorteilhaft wird der Aufnahme-Bereich in eine Ausnehmung in der Aufnahmeeinrichtung eingesteckt.

Bei einer vorteilhaften Ausführung des Adapters ist er länglich. An zwei Endbereichen, insbesondere an gegenüberliegenden Endbereichen, sind jeweils Arm-Bereich und Aufnahme-Bereich vorgesehen. Zur einfacheren Herstellung, insbesondere auch Bedienung, ist ein Adapter einteilig ausgebildet, insbesondere dann, wenn die Befestigung an dem Scheibenwischerarm relativ einfach erfolgen kann. Vorteilhaft ist er einstückig ausgeführt, wobei es besonders vorteilhaft ist, wenn keine bewegbaren Teile daran vorgesehen sind. Ein solcher Adapter ist relativ einfach in der Herstellung und vor allem im Gebrauch. Durch den Verzicht auf bewegbare Teile ist der Einsatz in verhältnismäßig rauen Umgebungen wie Werkstätten oder Tankstellen möglich.

Das Einstellen oder Korrigieren des Scheibenwischerarms erfolgt durch Verdrehen oder Verbiegen. Dazu ist eine gewisse Kraft notwendig, die nicht auf seine Lagerung wirken sollte, sondern nur innerhalb des Scheibenwischerarms zu einer Verformung führen sollte. Hier können für Scheibenwischerarme mit schmalem bzw. dünnem Profil zwei Werkzeuge verwendet werden, welche entsprechende schlitzförmige Ausnehmungen aufweisen, mit denen der Arm an zwei Stellen in gewissem Abstand voneinander übergriffen und verbogen werden kann. Diese Werkzeuge stellen so eine eigene erfinderische Idee dar, die unabhängig von dem vorher beschriebenen ist. Die Werkzeuge können beispielsweise aus Metall oder sehr stabilem Material sein, im Bereich der Ausnehmungen, insbesondere zur direkten Anlage, jedoch mit Kunststoff ummantelt sein oder solchen aufweisen. So ist es möglich, die Oberflächen der Scheibenwischerarme zu schonen. Die Werkzeuge können auch an beiden Enden einer langen Stange odgl. jeweils verschieden ausgebildete Ausnehmungen aufweisen, beispielsweise mit unterschiedlicher Breite.

Bei einer weiteren erfinderischen Ausführung der Werkzeuge können diese nicht mit einer schlitzförmigen Ausnehmung versehen sein. Sie sind mit einem in Stangenrichtung weisenden Gewinde und einem dagegen verschraubbaren Gegenstück versehen. Dabei sind Stangenende und Gegenstück so ausgebildet dass das Gegenstück zum Eingreifen in ein U-förmiges Profil eines Scheibenwischerarms geeignet ist, und zwar an der Seite des Profils zwischen den beiden Schenkeln, wobei durch Öffnungen in dieser Seite das Gewinde des Stangenendes gesteckt wird. Hier wäre ein Werkzeug mit schlitzförmiger Öffnung unbrauchbar. Mit dem Gegenstück wird die Stange an dem Profil so fest verschraubt, dass wiederum mit zwei solchen Werkzeugen in einem gewissen Abstand voneinander ein Verschränken oder Verbiegen möglich ist.

Zusätzlich kann noch zur besseren Befestigung über das Gewinde ein Passungs-Stück geführt werden, welches an dem Profil des Scheibenwischerarms flächig anliegt und es eventuell sogar U-förmig übergreift, um eine möglichst gute Anlage zur Krafteinleitung zu erhalten. So wird das Profil zwischen dem Passungs-Stück und dem Gegenstück gehalten. Das Passungs-Stück kann eine Oberfläche aus Kunststoff aufweisen oder ganz aus Kunststoff sein, um die sichtbare Seite des Scheibenwischerarms nicht zu verkratzen.

Die vorgenannten Geräte zur Vermessung und/oder Einstellung eines Scheibenwischerarms können beispielsweise auf zwei unterschiedliche Arten ausgebildet sein. Zur Messung beispielsweise einer Winkelauflage des Scheibenwischerarms gegenüber der Scheibe, insbesondere was die spätere entsprechende Stellung des Scheibenwischergummis betrifft, kann eine Winkel-Scheibenauflageeinrichtung vorgesehen sein. Daran ist eine Winkel-Aufnahmeeinrichtung drehbar gelagert, welche einer vorbeschriebenen Aufnahmeeinrichtung entsprechen kann. So ist mittels eines vorgenannten Adapters ein Scheibenwischerarm daran ankoppelbar oder befestigbar. Des weiteren sind Mittel vorgesehen, mit denen ein Winkel bzw. Drehwinkel zwischen der Winkel-Aufnahmeeinrichtung und der Winkel-Scheibenauflageeinrichtung erfasst werden kann.

Weiter sind für die Bestimmung des Anpressdrucks, mit welchem ein Scheibenwischerarm insbesondere mit anmontiertem Scheibenwischer im Betrieb gegen die Scheibe drückt, eine Druck-Scheibenauflageeinrichtung und eine Kraft-Messeinrichtung vorgesehen. An der Druck-Scheibenauflageeinrichtung ist eine Druck-Aufnahmeeinrichtung bewegbar angeordnet, welche einer vorgenannten Aufnahmeeinrichtung entsprechen kann. Über einen speziell ausgebildeten Adapter, beispielsweise auf vorgenannte Art und Weise, ist der Scheibenwischerarm an der Druck-Aufnahmeeinrichtung ankoppelbar. Des Weiteren ist die Druck-Aufnahmeeinrichtung über die Kraft-Messeinrichtung derart mit der Druck-Scheibenauflageeinrichtung verbunden, dass der Scheibenwischerarm über die Verbindung mit der Druck-Aufnahmeeinrichtung gegen die Scheibe und somit die Druck-Scheibenauflageeinrichtung den Anpressdruck mittels der Kraft-Messeinrichtung erfassbar macht. Der Druck kann über Piezo-Sensoren oder Dehnungs-Meßstreifen gemessen werden.

Die Befestigung des Adapters an dem Aufnahme-Bereich an einer Aufnahmeeinrichtung sollte kraftschlüssig sein und relativ leicht lösbar. Möglichkeiten sind hier eine Klemmfeder oder Klemmschraube. Dadurch sind in gewissem Maß noch Toleranzausgleiche möglich.

Die Scheibenauflageeinrichtung ist vorteilhaft derart ausgebildet, dass sie auf einer Fläche, wie beispielsweise einer Motorhaube, welche horizontal oder leicht geschrägt ist, stabil steht, ohne umzufallen. So kann sie zur besseren Handhabung und Vorbereitung der Messung dort abgestellt werden. Vorteilhaft weist die Scheibenauflageeinrichtung mehrere, insbesondere mindestens drei, Auflagepunkte auf. Diese sind vorteilhaft fest angeordnet und nicht beweglich, insbesondere möglichst wenig elastisch. Ansonsten könnte eine Messung verfälscht werden.

Es ist vorteilhaft, wenn die Mittel zur Erfassung des Drehwinkels derart ausgebildet sind, dass ein Ablesen, beispielsweise von einer entsprechenden Skala, zumindest von derjenigen Seite aus möglich ist, an welche der Scheibenwischerarm heranreicht. Dies ermöglicht es, die vorschriftsmäßige Befestigung des Scheibenwischerarms daran zu überwachen und gleichzeitig den Drehwinkel zu bestimmen. Insbesondere gilt diese Ablesbarkeit auch für eine Kraft-Messeinrichtung. Noch vorteilhafter ist es natürlich, die Messwerte von zwei Seiten aus ablesen zu können.

Bei einer besonders bevorzugten Ausgestaltung der Erfindung sind die Geräte in einer Einheit vorhanden. So ist eine gemeinsame Scheibenauflageeinrichtung vorgesehen. Des weiteren ist es dann möglich, mit einer einzigen Kopplung des Scheibenwischerarms an die Einrichtung einen Auflagewinkel und einen Anpressdruck zu ermitteln, gegebenenfalls sogar in einem Schritt. Dieses macht nicht nur ein schnelleres Arbeiten möglich. Ein besonders großer Vorteil liegt darin, dass bei einer gegebenenfalls möglichen Veränderung des Auflagewinkels und des Anpressdrucks der jeweils andere Wert überwacht werden kann und so ein aufwendiger Justiervorgang, der durch zwei unterschiedliche Faktoren beeinflusst wird, vereinfacht werden kann.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im folgenden näher erläutert. In den Zeichnungen zeigen:
- Fig. 1: eine Seitenansicht eines ersten Adapters,
- Fig. 2: eine Draufsicht von oben auf den Adapter aus Fig. 1 mit angesetztem Scheibenwischerarm,
- Fig. 3: eine skizzierte Darstellung einer Winkel-Scheibenauflageeinrichtung mit über den Adapter aus Fig. 1 befestigtem Scheibenwischerarm auf einer Frontscheibe,
- Fig. 4: eine Seitenansicht eines zweiten Adapters mit Klemmschrauben,
- Fig. 5: die Darstellung aus Fig. 4 mit verdrehter Klemmschraube,
- Fig. 6: eine Seitenansicht eines dritten Adapters mit einer federnden Rasteinrichtung und
- Fig. 7: eine Schrägansicht eines Werkzeuges mit zwei unterschiedlichen Enden zum Verschränken eines Scheibenwischerarms.

### Detaillierte Beschreibung der Ausführungsbeispiele

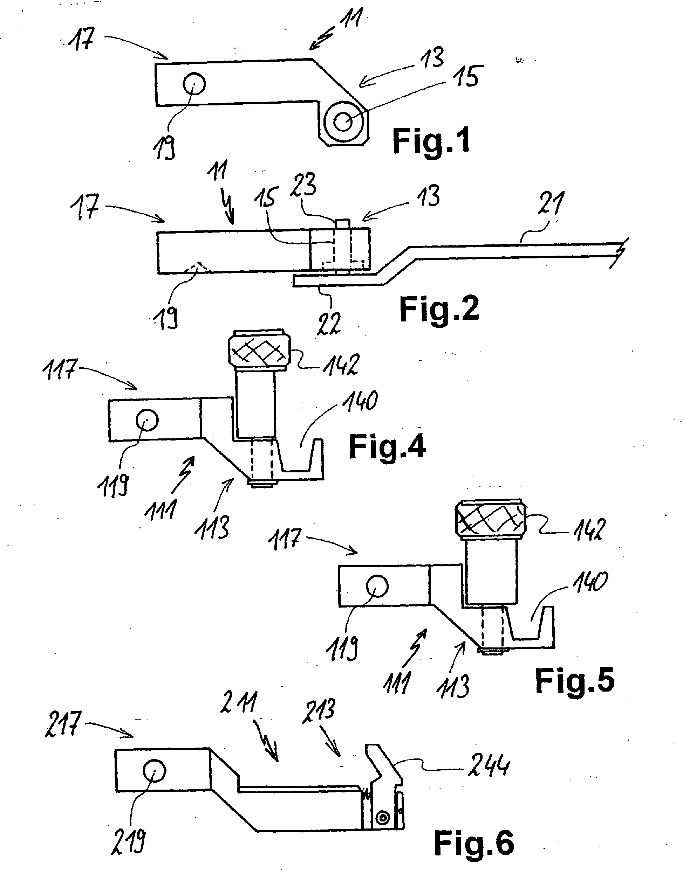

In Fig. 1 ist ein erster Adapter 11 in Seitenansicht dargestellt. Der Adapter 11 weist an seinem rechten Teil den Arm-Bereich 13 auf. Dieser ist leicht nach unten abgewinkelt und trägt am Ende eine Arm-Bohrung 15.

Am linken Teil weist der Adapter 11 den Aufnahme-Bereich 17 auf mit einer Aufnahme-Senkung 19. In die Aufnahme-Senkung 19 greift eine Klemmschraube einer Aufnahmeeinrichtung und sorgt so für eine punktgenaue und sichere Befestigung.

Aus der Draufsicht in Fig. 2 ist zu erkennen, wie ein Scheibenwischerarm 21 mit einem Armende 22 und einem davon rechtwinklig abstehenden Scheibenwischerbolzen 23 an dem Adapter 11 befestigt ist. Dazu wird der Adapter 11 mit der Arm-Bohrung 15 auf den Scheibenwischerbolzen 23 gesteckt. Eine weitere Befestigung ist nicht nötig. Durch diese Art der Befestigung ist eine Verdrehung von Adapter 11 und Scheibenwischerarm 21 um ihre Längsachse ausgeschlossen. Durch die Art der Befestigung des Adapters 11 an der Aufnahmeeinrichtung stört auch die Verschwenkbarkeit der beiden Teile um den Scheibenwischerbolzen 23 nicht. Dies wird im weiteren noch genauer erläutert.

In Fig. 3 ist zu erkennen, wie eine Winkel-Scheibenauflageeinrichtung 27 auf eine Frontscheibe 29 eines Kraftfahrzeugs aufgesetzt ist. Skizziert angedeutet sind dabei auch die Motorhaube 30 samt der Motorhaubenkante 31 zur Frontscheibe 29 hin, welche sich nach links erstrecken.

Die Winkel-Scheibenauflageeinrichtung 27 weist eine Grundplatte 33 auf, an der sich am hinteren Ende der Aufbauteil 34 anschließt, der eine nach oben ragende Winkelskala 35 trägt. Diese drei Teile sind starr und fest miteinander verbunden. An dem Aufbauteil 34 ist verdrehbar eine Aufnahmeeinrichtung 36 angeordnet. Die Drehachse erstreckt sich dabei parallel zur Grundplatte 33 und senkrecht zum Aufbauteil 34 bzw. zur Winkelskala 35. In die Aufnahmeeinrichtung 36 ist der Adapter 11 eingesetzt, an dem, wie in Fig. 2 dargestellt ist, der Scheibenwischerarm 21 angesetzt ist. Mittels einer Klemmschraube 37, welche in die Aufnahme-Senkung 19 eingreift, ist der Adapter 11 an der Aufnahmeeinrichtung 36 befestigt. Des weiteren steht von der Aufnahmeeinrichtung 36 senkrecht nach oben und somit in etwa parallel zur Winkelskala 35 ein Zeiger 38 ab. An diesem kann, wie zu erkennen ist, ein Winkel am oberen Ende der Winkelskala 35 abgelesen werden.

Durch Verdrehen des Scheibenwischerarms 21 um seine Längsachse und durch die Kraftübertragung mittels des Adapters 11 verdreht sich die Aufnahmeeinrichtung 36 um ihre Drehachse. Dabei wandert der Zeiger 38 entlang der Winkelskala 35 und zeigt den Drehwinkel des Scheibenwischerarms 21 gegenüber der Winkel-Scheibenauflageeinrichtung 27 und somit gegenüber der Frontscheibe 39 an. Der Winkel, mit welchem der Scheibenwischerarm 21 zu der Frontscheibe 29 und somit auch der Scheibenwischer selber sowie der Scheibenwischergummi zur Frontscheibe 29 stehen, kann nun dadurch eingestellt werden, dass der Scheibenwischerarm 21 um seine Längsachse verdreht wird, beispielsweise durch Zuhilfenahme von Werkzeug, welches an zwei versetzten Stellen an den Scheibenwischerarm 21 angreift. In dem dazwischenliegenden Abschnitt kann dann der Scheibenwischerarm 21 tordiert bzw. um seine Längsachse verdreht werden und so der Winkel eingestellt werden. Dabei ist es möglich, dass der Scheibenwischerarm 21 mittels des Adapters 11 an die Winkel-Scheibenauflageeinrichtung 27 angekoppelt bleibt, um die Einstellung des Winkels genau vornehmen zu können.

Es ist selbstverständlich, dass für verschiedene Fahrzeuge und/oder verschiedene Konstruktionen von Scheibenwischerarmen die Winkel jeweils unterschiedlich sein müssen. Diese Winkel können in Tabellen für jeweils die unterschiedlichen Typen festgelegt sein und bei Bedarf herangezogen werden, um die jeweilige genaue Einstellung vorzunehmen.

Aus der Fig. 3 ist auch zu erkennen, dass die Verdrehbarkeit von Scheibenwischerarm 21 zu Adapter 11 über den Scheibenwischerbolzen 23 nicht stört. Durch die feste und unbewegliche Aufnahme des Adapters 11 mit dem Aufnahme-Bereich 17 in der Aufnahmeeinrichtung 36 kann hierüber keine Bewegung stattfinden.

In weiterer Ausgestaltung der Erfindung könnte zur Messung des Auflagedrucks des Scheibenwischerarm 21 gegenüber der Frontscheibe 29 in der Einrichtung 27 auch noch ein Kraftmesser eingebaut sein. Dieser kann an der Einrichtung 27 selber oder auch an der Aufnahmeeinrichtung 36 vorgesehen sein. Hier bieten sich sowohl Kraftmesser über Federn als auch elektrische Kraftmesser an, beispielsweise über Piezo-Elemente.

In Fig. 4 ist eine weitere Ausbildung eines Adapters 111 dargestellt. Es ist zu erkennen, wie der linke Aufnahme-Bereich 17 identisch zu dem Adapter 11 aus Fig. 1 ausgebildet ist, nämlich länglich mit rechteckigem Querschnitt und mit der Aufnahme-Senkung 119. Der Arm-Bereich 13 ist anders ausgebildet zur Aufnahme eines speziellen Scheibenwischerarms. Es ist nämlich eine Nut 140 vorgesehen, in die ein entsprechender Vorsprung des Scheibenwischerarms eingreift. Wird die Klemmschraube 142 verdreht, wie zum Vergleich in Fig. 5 zu erkennen ist, so kann eine Festklemmung eines darüberliegenden Bereichs des Scheibenwischerarms erfolgen. Dabei kann sich der Durchmesser der Klemmschraube 142 langsam und stetig erweitern, um eine Festklemmung zu ermöglichen.

Eine weitere Ausbildung eines Adapters 211 ist in Fig. 6 dargestellt. Auch hier ist der linke Aufnahme-Bereich 217 wieder identisch ausgebildet. Der rechte Arm-Bereich 213 weist eine federgelagerte Rasteinrichtung 244 auf. An dieser Rasteinrichtung 244 kann ein entsprechender Teil eines nicht dargestellten Scheibenwischerarms angebracht bzw. durch Rastung befestigt werden.

Somit ist aus den Darstellungen einerseits zu entnehmen, wie die Adapter stets auf selbe Art und Weise ausgebildete Aufnahme-Bereiche aufweisen. Die Arm-Bereiche dagegen sind an die jeweiligen Scheibenwischerarme angepasst und können sehr unterschiedliche Befestigungssysteme aufweisen.

Des weiteren ist zu erkennen, wie der Aufbau der Adapter relativ einfach gehalten sein kann. So ist es möglich, einen Satz vieler verschiedener Adapter zu relativ geringen Kosten herzustellen, die jeweils mit dem Arm-Bereich speziell auf verschiedene Scheibenwischerarme abgestimmt sind. Mit den genormt ausgebildeten Aufnahme-Bereichen können sie an eine Einrichtung, beispielsweise eine Winkel-Scheibenauflageeinrichtung 27 gemäß Fig. 3, angekoppelt bzw. daran befestigt werden. Mit den Einrichtungen 27 kann dann beispielsweise der Auflagewinkel des Scheibenwischerarms bzw. seines Scheibenwischers zur Frontscheibe, ebenfalls auch zur Heckscheibe, eines Autos gemessen werden. Die Verstellung dieses Auflagewinkels kann erfolgen, wenn der Scheibenwischerarm an die Einrichtung 27 angekoppelt ist.

Zu dem Aufbau der Winkel-Scheibenauflageeinrichtung 27 ist noch zu sagen, dass diese ebenfalls relativ einfach aufgebaut ist. Des weiteren ist daraus zu erkennen, dass die Grundplatte 33 fest auf der Frontscheibe 29 aufliegen kann ohne bewegliche Teile. Eine Bewegung des Scheibenwischerarms 21 relativ zur Einrichtung 27 findet lediglich über die Aufnahmeeinrichtung 36 statt, die drehbar gelagert ist. Somit wäre es in weiterer Ausgestaltung der Erfindung auch möglich, die Aufnahmeeinrichtung 36 so auszubilden, dass sie von der Grundplatte 33 bzw. dem Aufbauteil 34 leicht entfernbar ist. Dann kann anstelle Aufnahmeeinrichtung 36 mit dem Zeiger 38 eine andere Aufnahmeeinrichtung mit einer Druckmesseinrichtung angebracht werden. Somit kann auch hier ein System relativ leicht verwendbar und modular aufgebaut sein.

Alternativ kann bei einer konstruktiv vorgesehenen Abnehmbarkeit der Aufnahmeeinrichtung 36 von der Einrichtung 27 vorgesehen sein, diese mittels des Adapters 11 an den Scheibenwischerarm festgekoppelt zu lassen und an einer anderen Einrichtung, beispielsweise zur Messung des Auflagedrucks, zu befestigen. So ist es nur einmal notwendig, den Scheibenwischerarm 21 über einen Adapter 11 an eine Aufnahmeeinrichtung 36 zu koppeln. Soll anstelle des Winkels, wie in Fig. 3 dargestellt, der Auflagedruck gemessen werden, so kann eine Ankopplung der Aufnahmeeinrichtung 36 an eine Druckmesseinrichtung erfolgen.

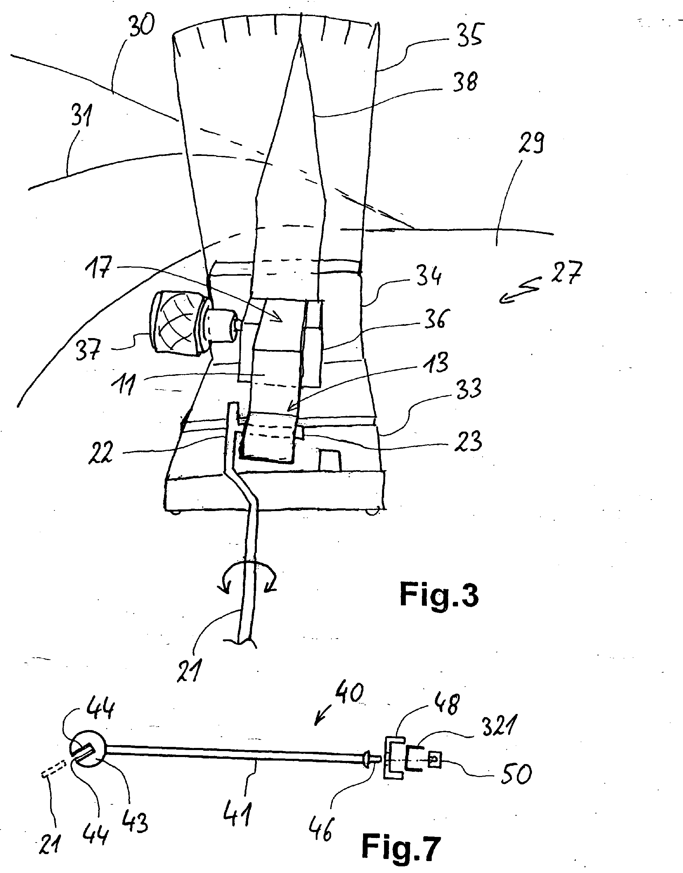

Die Fig. 7 zeigt ein Werkzeug 40 zum Verschränken von Scheibenwischerarmen 21 oder 321. Das linke Ende weist einen metallischen Kopf 43 mit einem Schlitz zum Übergreifen des gestrichelt dargestellten Scheibenwischerarms 21. Der Schlitz ist mit Kunststoff 44 verkleidet.

Das rechte Ende weist ein Gewinde 46 auf. Über dieses wird ein Gegenstück 48 gesteckt mit einer entsprechenden Öffnung. Dann wird das Gewinde 46 durch eine Öffnung in dem U-förmigen Scheibenwischerarm 321 gesteckt. Anschließend wird das Gegenstück 50 mit einem entsprechenden Innengewinde auf das Gewinde 46 der Stange 41 geschraubt. So wird der Scheibenwischerarm 321 mit dem Werkzeug 40 fest verbunden und kann dann verbogen werden.

## Patentansprüche

1. Set von Adaptern (11, 111, 211) zur Kopplung eines Scheibenwischerarms (21) an einer Aufnahmeeinrichtung (36) eines Messgeräts (27) oder eines Einstellgeräts für den Scheibenwischerarm, wobei mehrere Adapter (11, 111, 211) ausgebildet sind zur Kopplung eines Scheibenwischerarms (21) an eine Aufnahmeeinrichtung (36) eines Messgeräts (27) oder eines Einstellgeräts für den Scheibenwischerarm, wobei der Adapter (11, 111, 211) mit einem ersten Arm-Bereich (13, 113, 213) zur Befestigung an dem Scheibenwischerarm ausgebildet ist und mit einem zweiten Aufnahme-Bereich (17, 117, 217) zur Kopplung oder Verbindung an die Aufnahmeeinrichtung (36) ausgebildet ist, wobei jeder Adapter einen unterschiedlichen ersten Arm-Bereich (13, 113, 213) aufweist zur Befestigung an unterschiedlich ausgebildeten Scheibenwischerarmen (21), und die zweiten Aufnahme-Bereiche (17, 117, 217) der Adapter (11, 111, 211) jeweils an dieselbe Aufnahmeeinrichtung (36) koppelbar sind.

2. Set von Adaptern nach Anspruch 1, **gekennzeichnet durch** verschiedene Ausführungen von Adaptern (11, 111, 211) mit verschiedenen ersten Arm-Bereichen (13, 113, 213) für unterschiedlich ausgebildete Scheibenwischerarme (21), wobei die verschiedenen Ausführungen von Adaptern an dem zweiten Aufnahme-Bereich (17, 117, 217) passend zu einer immer gleichen Aufnahmeeinrichtung (36) ausgebildet sind.

3. Set von Adaptern nach Anspruch 1 oder 2, **dadurch gekennzeichnet, dass** der erste Arm-Bereich (13, 113, 213) ausgebildet ist zur Befestigung an dem Ende (22) des Scheibenwischerarms (21).

4. Set von Adaptern nach einem der vorhergehenden Ansprüche, **dadurch gekennzeichnet, dass** der erste Arm-Bereich (13, 113, 213) ausgebildet ist zur gleichen Befestigung an dem Scheibenwischerarm (21) wie ein Scheibenwischer, wobei vorzugsweise der erste Arm-Bereich Ausnehmungen (15, 140) und/oder Vorsprünge (244) aufweist, die zu Vorsprüngen (23) und/oder Ausnehmungen an dem Scheibenwischerarm (21) korrespondieren, an welchen der Scheibenwischer befestigbar ist.

5. Set von Adaptern nach einem der vorhergehenden Ansprüche, **dadurch gekennzeichnet, dass** der erste Arm-Bereich (13, 113, 213) bzw. dessen Befestigung an den Scheibenwischerarm (21) steckbar ausgebildet ist, vorzugsweise ohne zusätzlich bewegliche Teile, insbesondere Verriegelungsteile.

6. Set von Adaptern nach einem der Ansprüche 1 bis 4, **dadurch gekennzeichnet, dass** der erste Arm-Bereich mit einer breiten Öffnung für eine Klemmung, vorzugsweise seitlich mittels einer Klemmschraube, des Scheibenwischerarms ausgebildet ist.

7. Set von Adaptern nach einem der vorhergehenden Ansprüche, **dadurch gekennzeichnet, dass** der zweite Aufnahme-Bereich (17, 117, 217) normiert ausgebildet ist mit bestimmten Vorgaben für die Aufnahmeeinrichtung (36).

8. Set von Adaptern nach einem der vorhergehenden Ansprüche, **dadurch gekennzeichnet, dass** der zweite Aufnahme-Bereich (17, 117, 217) als einfache geometrische Grundform ausgebildet ist, vorzugsweise mit einem Zylinderbereich, insbesondere mit viereckigem Querschnitt.

9. Set von Adaptern nach einem der vorhergehenden Ansprüche, **dadurch gekennzeichnet, dass** der zweite Aufnahme-Bereich (17, 117, 217) ausgebildet ist zum Einstecken in eine Ausnehmung in der Aufnahmeeinrichtung (36), vorzugsweise mit einem im wesentlichen frei stehenden Abschnitt.

10. Set von Adaptern nach einem der vorhergehenden Ansprüche, **dadurch gekennzeichnet, dass** einer Adapter etwa länglich ist und der erste Arm-Bereich (13, 113, 213) an einem Endbereich vorgesehen ist, wobei der zweite Aufnahme-Bereich (17, 117, 217) an einem anderen Endbereich vorgesehen ist.

11. Set von Adaptern nach einem der vorhergehenden Ansprüche, **dadurch gekennzeichnet, dass** einer Adapter einteilig (11) ausgebildet ist, insbesondere einstückig, vorzugsweise ohne bewegbare Teile.

## Claims

1. Set of adapters (11, 111, 211) for coupling a wiper arm (21) to a holding arrangement (36) of a measuring device (27) or an adjusting device for the wiper arm, wherein a plurality of adapters (11, 111, 211) is configured for coupling a wiper arm (21) to the holding arrangement (36) of a measuring device (27) or an adjusting device for the wiper arm, wherein the adapter (11, 111, 211) is configured for fixing to the wiper arm with a first arm region (13, 113, 213) and being configured for coupling or connection to the holding arrangement (36) with a second holding region (17, 117, 217), wherein each adapter comprises a differing first arm region (13, 113, 213) for fixing to differently configured wiper arms (21) and the second holding regions (17, 117, 217) of the adapters (11, 111, 211) can each be coupled to the same holding arrangement (36).

2. Set of adapters according to claim 1, **characterised by** various constructions of adapters (11, 111, 211) with various first arm regions (13, 113, 213) for differently configured wiper arms (21), the various constructions of adapters on the second holding region (17, 117, 217) being configured so as to match an identical holding arrangement (36).

3. Set of adapters according to either claim 1 or claim 2, **characterised in that** the first arm region (13, 113, 213) is configured for fixing to the end (22) of the wiper arm (21).

4. Set of adapters according to any one of the preceding claims, **characterised in that** the first arm region (13, 113, 213) is configured for identical fixing to the wiper arm (21) as a wiper, the first arm region preferably comprising recesses (15, 140) and/or projections (244) which correspond to projections (23) and/or recesses on the wiper arm (21) to which the wiper can be fixed.

5. Set of adapters according to any one of the preceding claims, **characterised in that** the first arm region (13, 113, 213) and its fixing to the wiper arm (21) is configured so it can be inserted preferably without additional moving parts, in particular locking parts.

6. Set of adapters according to any one of claims 1 to 4, **characterised in that** the first arm region is configured with a wide opening for a clamping of the wiper arm preferably laterally by means of a clamping screw.

7. Set of adapters according to any one of the preceding claims, **characterised in that** the second holding region (17, 117, 217) is configured in as standard manner with specific specifications for the holding arrangement (36).

8. Set of adapters according to any one of the preceding claims, **characterised in that** the second holding region (17, 117, 217) is configured as a simple geometric basic shape, preferably with a cylinder region, in particular with a square cross-section.

9. Set of adapters according to any one of the preceding claims, **characterised in that** the second holding region (17, 117, 217) is configured for insertion into a recess in the holding arrangement (36), preferably with a substantially free-standing portion.

10. Set of adapters according to any one of the preceding claims, **characterised in that** an adapter is substantially oblong and the first arm region (13, 113, 213) is provided at an end region, the second holding region (17, 117, 217) being provided at another end region.

11. Set of adapters according to any one of the preceding claims, **characterised in that** an adapter (11) is configured in one part, in particular integrally, preferably without moving parts.

## Revendications

1. Ensemble d'adaptateurs (11, 111, 211) pour le couplage d'un bras d'essuie-glace (21) à un dispositif de logement (36) d'un appareil de mesure (27) ou d'un appareil d'ajustage du bras d'essuie-glace, sachant que plusieurs adaptateurs (11, 111, 211) sont réalisés pour le couplage d'un bras d'essuie-glace (21) à un dispositif de logement (36) d'un appareil de mesure (27) ou d'un appareil d'ajustage du bras d'essuie-glace, sachant que l'adaptateur (11, 111, 211) est réalisé de manière à présenter une première partie côté bras (13, 113, 213) pour la fixation au bras d'essuie-glace et une deuxième partie côté logement (17, 117, 217) pour le couplage ou le raccordement au dispositif du logement (36), sachant que chaque adaptateur présente une première partie côté bras (13, 113, 213) différente pour la fixation à des bras d'essuie-glace différents et que les deuxièmes parties côté logements (17, 117, 217) des adaptateurs (11, 111,211) peuvent être respectivement couplées au même dispositif de logement (36).

2. Ensembles d'adaptateurs d'après la revendication 1, **caractérisé par** différentes formes de réalisation d'adaptateurs (11, 111, 211) avec différentes premières parties côté bras (13, 113, 213) pour différents bras d'essuie-glace (21), sachant que les différentes formes de réalisation des adaptateurs sont réalisées dans le domaine de la deuxième partie côté logement (17, 117, 217) de manière à convenir à un dispositif de logement (36) toujours identique.

3. Ensemble d'adaptateurs d'après la revendication 1 ou 2 **caractérisé en ce que** la première partie côté bras (13, 113, 213) est réalisée pour la fixation à l'extrémité (22) du bras d'essuie-glace (21).

4. Ensemble d'adaptateurs d'après une des revendications précédentes **caractérisé en ce que** la première partie côté bras (13, 113, 213) est réalisée pour être fixée au bras d'essuie-glace (21) de la même manière d'un essuie-glace, sachant que de préférence la première partie côté bras présente des creux (15, 140) et/ou des saillies (244) qui correspondent à des saillies (23) et/ou à des creux sur le bras d'essuie-glace (21) auquel peut être fixé l'essuie-glace.

5. Ensemble d'adaptateurs d'après une des revendications précédentes **caractérisé en ce que** la première partie côté bras (13, 113, 213) ou encore sa fixation au bras d'essuie-glace (21) est réalisée de manière enfichable, de préférence sans éléments mobiles additionnels, notamment sans éléments de verrouillage.

6. Ensemble d'adaptateurs d'après une des revendications de 1 à 4, **caractérisé en ce que** la première partie côté bras est réalisée de manière à présenter une ouverture large pour un blocage du bras d'essuie-glace, de préférence latéralement au moyen d'une vis de serrage.

7. Ensemble d'adaptateurs d'après une des revendications précédentes **caractérisé en ce que** la deuxième partie côté logement (17, 117, 217) est réalisée de manière normalisée, avec certaines normes pour le dispositif de logement (36).

8. Ensemble d'adaptateurs d'après une des revendications précédentes **caractérisé en ce que** la deuxième partie côté logement (17, 117, 217) est réalisée en tant que simple forme géométrique, de préférence avec un domaine cylindrique, présentant notamment une section transversale quadrangulaire.

9. Ensemble d'adaptateurs d'après une des revendications précédentes **caractérisé en ce que** la deuxième partie côté logement (17, 117, 217) est réalisée pour être enfichée dans un creux du dispositif de logement (36), de préférence par une section en substance librement saillissante.

10. Ensemble d'adaptateurs d'après une des revendications précédentes **caractérisé en ce qu'**un adaptateur est à peu près oblong et que la première partie côté bras (13, 113, 213) est prévue dans un domaine terminale, sachant que la deuxième partie côté logement est prévue dans un autre domaine terminal.

11. Ensemble d'adaptateurs d'après une des revendications précédentes **caractérisé en ce qu'**un adaptateur (11) est réalisée d'une seule pièce, notamment d'un bout, de préférence sans éléments mobiles.
